# EUROPEAN PATENT SPECIFICATION

(11) **EP 3 578 026 B1**
(45) Date of publication and mention of the grant of the patent: **06.04.2022**
(21) Application number: 19177969.3
(22) Date of filing: 03.06.2019
(51) Int. Cl.: A01C 3/06, A01B 17/00

(54) **VEHICLE AND METHOD FOR THE DISTRIBUTION OF BIOSOLIDS**
FAHRZEUG UND VERFAHREN ZUR VERTEILUNG VON BIOFESTSTOFFEN
VÉHICULE ET PROCÉDÉ POUR LA DISTRIBUTION DE BIOSOLIDES

(30) Priority: 04.06.2018 IT 201800006004
(43) Date of publication of application: 11.12.2019
(73) Proprietor: Valli S.p.A., 25017 Lonato del Garda, Brescia (IT)
(72) Inventor: PAROLINI, Sergio, 25017 Lonato del Garda, Brescia (IT)
(74) Representative: Chimini, Francesco

(56) References cited:
- EP-A1- 1 801 037
- WO-A1-2011/054059
- WO-A1-2016/015088
- WO-A2-2007/133181
- WO-A2-2010/003012
- FR-A1- 2 303 456

## Description

The present invention generally relates to the field of distribution of solid material for the fertilization of agricultural land.

More particularly, the present invention relates to a vehicle, for example a trailer or a motor vehicle, for distributing biosolid material, such as organic fertilizers or sewage sludge or defecation gypsum, or manure, on agricultural land.

Nowadays, for the distribution of biosolids on agricultural land it is known to use manure spreading trailers, also called manure spreaders. This type of trailer includes a body on the rear side of which there are housed vertical or horizontal rotating rotors provided with discs or fins for crushing and ejecting the manure at a distance.

By operating the tractor's power take-off, the gears are set in motion to spread solid animal manure in the field.

Disadvantageously, known manure spreaders are not suitable for spreading biosolid materials. In fact, the long-distance crushing and launching action of the rotating discs on the rear of the trailer promotes the atomization of biosolids, generating a considerable production of a thin powder aerosol with a particularly unpleasant smell.

Furthermore, in order to reduce the emission of smell, it is necessary to carry out a further operation to bury the biosolid once it is spread, by means of a further agricultural means, with a considerable increase in the timing of distribution of the biosolid.

The object of the present invention is to resolve the above drawbacks of the prior art. In particular, one of the objects of the present invention is to provide a vehicle for the distribution of biosolid material that reduces the generation of unpleasant smell and allows a more rapid distribution of the biosolid, reducing the time required for distribution over an entire plot of land. FR 2 303 456 A1 discloses a vehicle for the distribution of manure according to the preamble of claim 1.

According to the invention, these objectives are achieved by a vehicle and a method for distributing biosolid material according to the appended independent claims. Preferred embodiments of the invention are defined in the dependent claims.

The features and the advantages of the vehicle for agricultural distributing biosolid material will appear more clearly from the following description, made by way of an indicative and non-limiting example with reference to the accompanying figures, in which:
- figure 1 shows a side partially sectional view of a vehicle for distributing biosolid material according to an embodiment of the present invention;

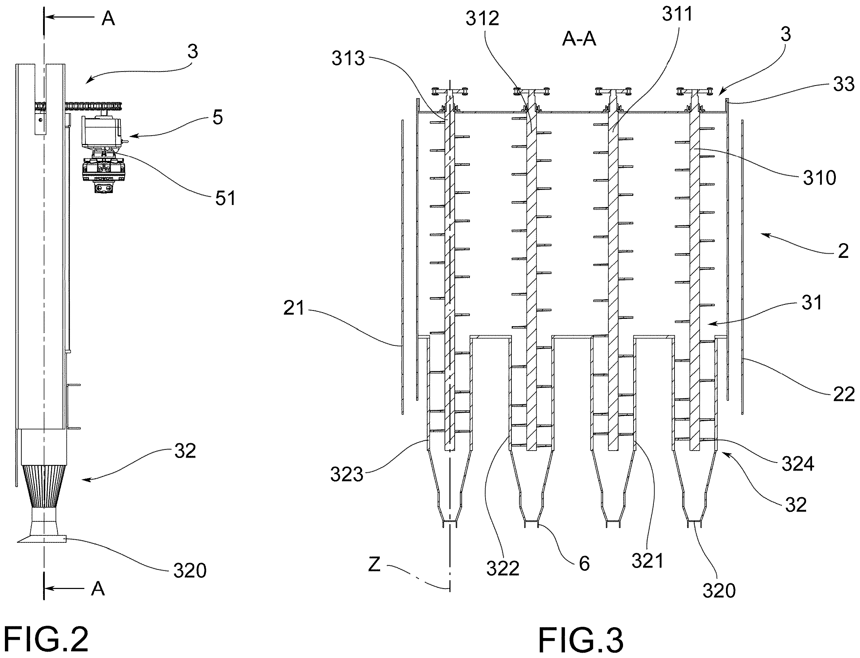

- figure 2 shows a side view of a rear end portion of the vehicle and of a spreader according to an embodiment according to the present invention;
- figure 3 shows a sectional view along the plane A-A indicated in figure 3, of the rear end portion of the vehicle and of the spreader according to an embodiment according to the present invention;

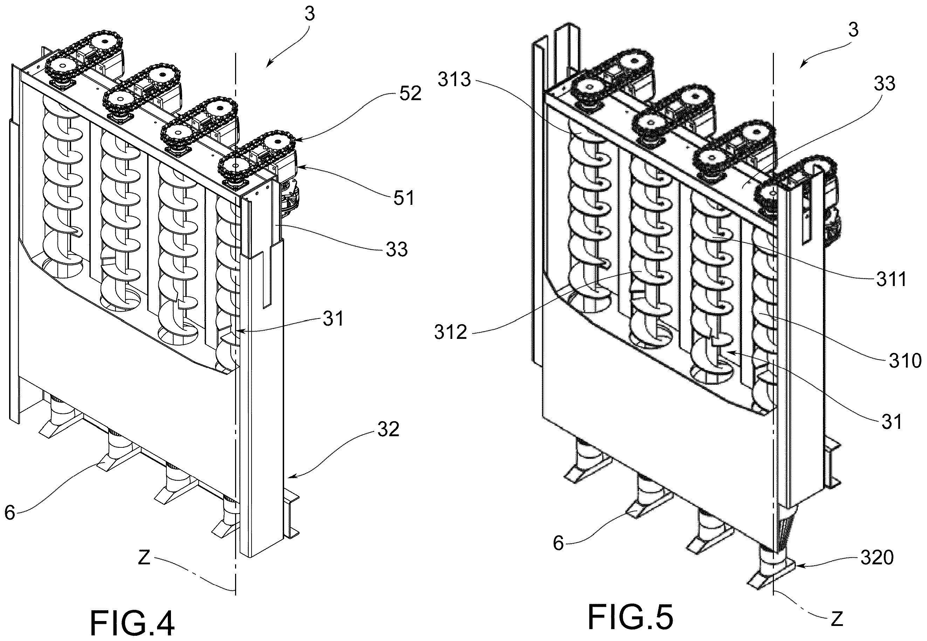

- figure 4 shows a perspective view of a spreader according to an embodiment of the present invention in which means for conveying the biosolid material are arranged in a backward position, towards a body of the vehicle;
- figure 5 shows a perspective view of a spreader according to an embodiment of the present invention in which the means for conveying the biosolid material are arranged in an advanced position, spaced towards the ground with respect to the backward position of figure 4;

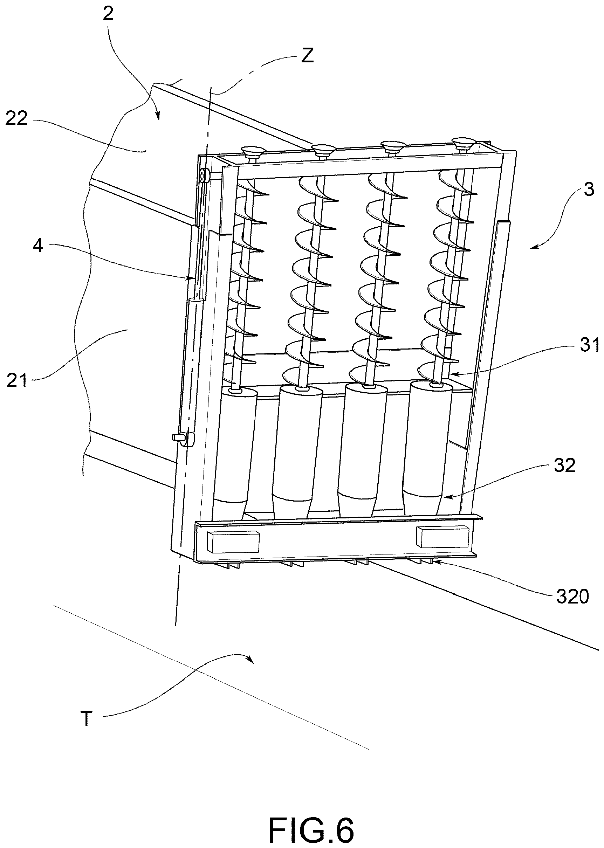

- figure 6 shows a perspective view of a rear part of the vehicle comprising a spreader according to an embodiment of the present invention in which means for conveying the biosolid material are arranged in a backward position, towards the body of the vehicle;

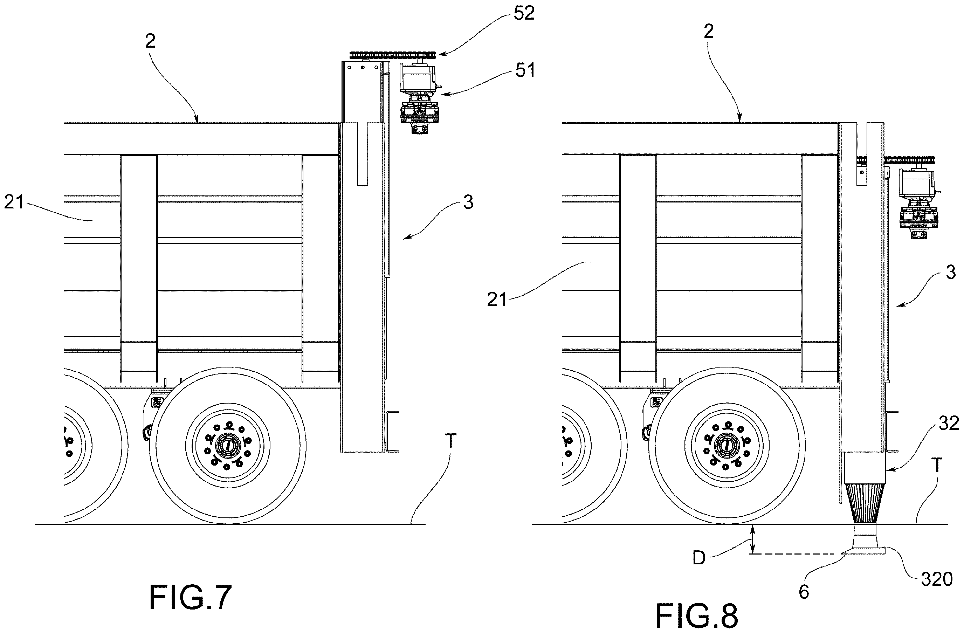

- figure 7 shows a side view of a rear part of the vehicle comprising a spreader according to an embodiment of the present invention in which the means for conveying the biosolid material are arranged in a backward position;
- figure 8 shows a side view a of a rear part of the vehicle comprising a spreader according to an embodiment of the present invention in which the means for conveying the biosolid material are arranged in an advanced position, towards the ground;

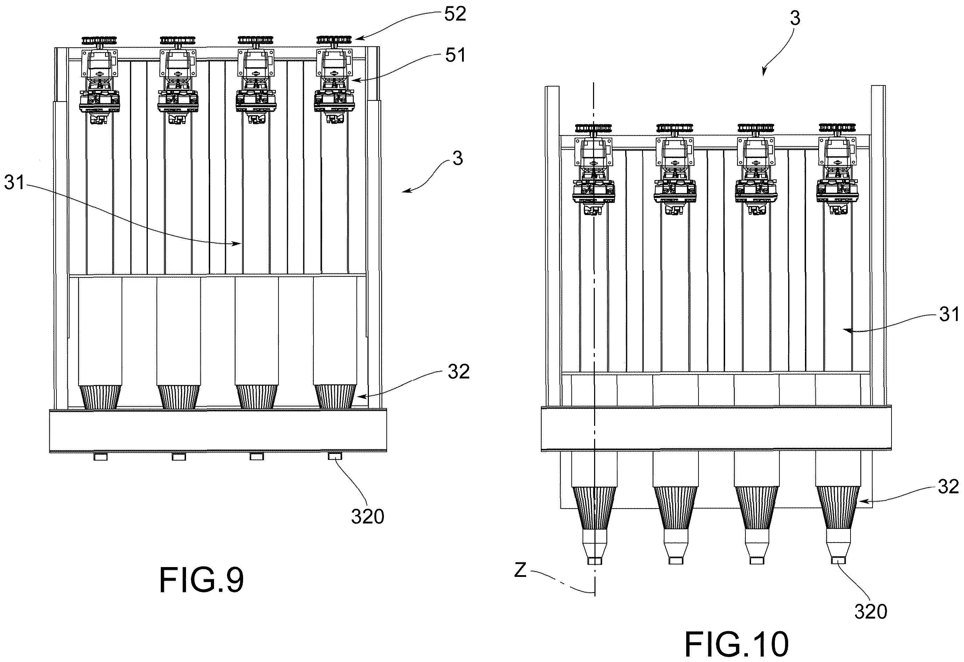

- figure 9 shows a rear elevation view of a spreader according to an embodiment of the present invention in a backward position, towards the body of the vehicle;
- figure 10 shows a rear elevation view of a spreader according to an embodiment of the present invention in an advanced position, towards the ground;
- figure 11 shows a perspective view of a spreader according to an embodiment of the present invention;
- figure 12 shows a perspective view of a spreader according to a further embodiment of the present invention.

According to the accompanying figures, reference numeral 1 generally indicates a vehicle for distributing biosolid material, for example sewage sludge or defecation gypsum or derivatives thereof, on agricultural land. Although the distribution of biosolid material is the main use of the vehicle according to the present invention, this vehicle 1 is also intended for the distribution of manure or other solid material for agriculture, for example granular, preferably having mechanical and viscous characteristics similar to the biosolid material or manure. The vehicle is therefore intended to spread a solid fertilizer on the land, with a different consistency than animal slurry (liquid), and which therefore requires an adequate distribution method.

The vehicle comprises a body 2 adapted to contain the biosolid material and adapted to be transported on the agricultural land (T) . The body 2 is for example supported by wheels suitable for traveling over agricultural land. The vehicle is for example a wagon or a trailer, usable in agriculture, preferably provided with a covering sheet.

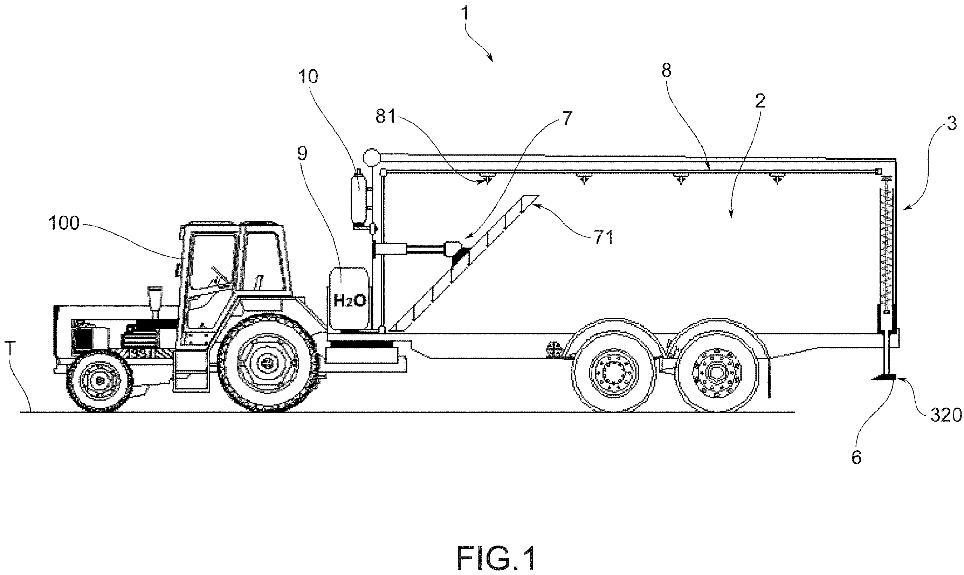

Figure 1 shows an embodiment of a vehicle according to the present invention driven by an agricultural tractor 100.

It is clear that, in a variant embodiment, the vehicle 1 according to the present invention per se comprises motor means for moving on agricultural land, and is therefore a motor vehicle with an electric or thermal motor just for the movement on the agricultural land.

The vehicle 1 comprises a spreader 3 supported on at least one 21, 22 of the sides of the body 2. Preferably, as shown in the accompanying figures, the spreader 3 is supported between two opposite sides 21, 22 of the body, for example in the rear area, in the vicinity of the rear end of the body.

The spreader 3 comprises picking means 31 of the biosolid material from the body and conveying means 32 of the biosolid material coming from the picking means 31 towards the land T.

Preferably, the picking means 31 comprise one or more rotating augers 310, 311, 312, 313 adapted to pick up the biosolid material from the body and push it towards the conveying means 32. Other embodiments of the picking means may comprise pistons or hydraulic plates or picking means suitable for picking a biosolid material without resulting in clogging or blockage of the picking means.

The conveying means 32 comprise an outlet mouth 320 for the biosolid material towards the land T.

Preferably, the conveying means comprise one or more bottoms or conduits 321, 322, 323, 324, arranged partially or only partially around the rotating augers 310, 311, 312, 313, suitable for receiving the biosolid material picked by the rotating augers 310, 311, 312, 313 from the body and conveying it towards the outlet mouth 320.

Preferably, the picking means 31 and the conveying means are arranged mainly along a vertical direction Z, perpendicular to the ground.

In particular, in the embodiments shown in the figures, the rotating augers 310, 311, 312, 313 are arranged with their axis of rotation parallel to the vertical direction Z, so that the biosolid material is picked from the body and is pushed in the vertical direction Z from top to bottom, inside the bottoms or conduits 321, 322, 323, 324.

Preferably, each bottom or conduit 321, 322, 323, 324 extends mainly along the vertical direction Z and at least partially accommodates a rotating auger 310, 311, 312, 313 therein.

Preferably, moreover, the end portion of each bottom or conduit 321, 322, 323, 324 is tapered.

Preferably, the picking means 31 and the conveying means 32 are integrated in the spreader 3. In other words, the picking means 31 and the conveying means 32 share common structures of the spreader for performing different functions (picking and conveying).

The vehicle further comprises member actuating means 4, for example one or more hydraulic cylinders, adapted to move the conveying means 32 from a retracted position in which the outlet mouth 320 is spaced above the surface of the land T, to an advanced position, in which the outlet mouth 320 is adapted to be just above the surface of the ground or buried in the ground at a given depth D. This allows the biosolid material to be released directly near the land or into the land when the vehicle is in operation, according to a distance adjustable by an operator.

Preferably, the conveying means 32 comprise one or more hoes 6 adapted to create a furrow in the ground, the outlet mouth 320 for the biosolid material coming from the picking means 31 being formed on each of said hoes 6. The hoes 6 allow creating a furrow in the ground while the vehicle is moving and at the same time release the biosolid material into the land, which will then be covered by the surrounding land once the hoe passage has ended. This allows releasing the biosolid material in the land in a controlled manner, which will be immediately covered by the surrounding land, drastically reducing the possibility of some particles of biosolid material being released into the air.

Preferably, in the advanced position of the conveying means, the outlet mouth 320 is buried in the ground at a depth D of less than 30 cm, preferably less than or equal to 20 cm, so as to allow an adequate compromise between unpleasant smell reduction and adequate fertilization of the land.

In a preferred embodiment, shown in the figures, the member actuating means 4 are adapted to move both the picking means 31 and the conveying means 32, integrally connected to each other.

According to the invention, the spreader 3 comprises a frame 33 supported by the opposite sides 21, 22 of the body 2. The frame 33 supports the picking means 31 and the conveying means 32. Preferably, the picking means 31 and the conveying means 32 are directly connected to the frame 33 and are integral therewith so that when the actuating means 4 move the frame 33, the result is the movement both of the picking means 31 and of the conveying means 32.

Preferably, the frame 33 is slidably supported by the body 2, as for example clearly visible in all the accompanying figures. In particular, the frame 33 is slidably supported by the body along the vertical direction Z. In this variant, on one 21 or on both opposite sides 21, 22 of the body a sliding guide 330 is preferably provided on which the frame 33 is slidably engaged.

According to the invention, the member actuating means 4 are operatively connected to the frame 33 to translate it along the vertical direction Z substantially perpendicular to the ground.

In the embodiment which provides for the rotating augers, the vehicle 1 further comprises auger-actuating means 5 suitable for rotating each or more rotating augers 310, 311, 312, 313. The auger-actuating means 5 comprise for example an electric motor 51 and transmission means 52 for transmitting the rotary motion of the electric motor 51 to the auger 310, 311, 312, 313. Preferably, each auger 310, 311, 312, 313 is moved by a respective electric motor 51 and by a respective transmission means 52. In this way it is possible to control the rotary movement of each auger independently of each other, reducing the risks of blockage and allowing a more effective regulation of the distribution of the biosolid material on the land.

In a preferred embodiment, the frame 33 supports the auger-actuating means 5. The auger-actuating means 5 are therefore also translated in the vertical direction Z when the frame is translated in the same vertical direction Z.

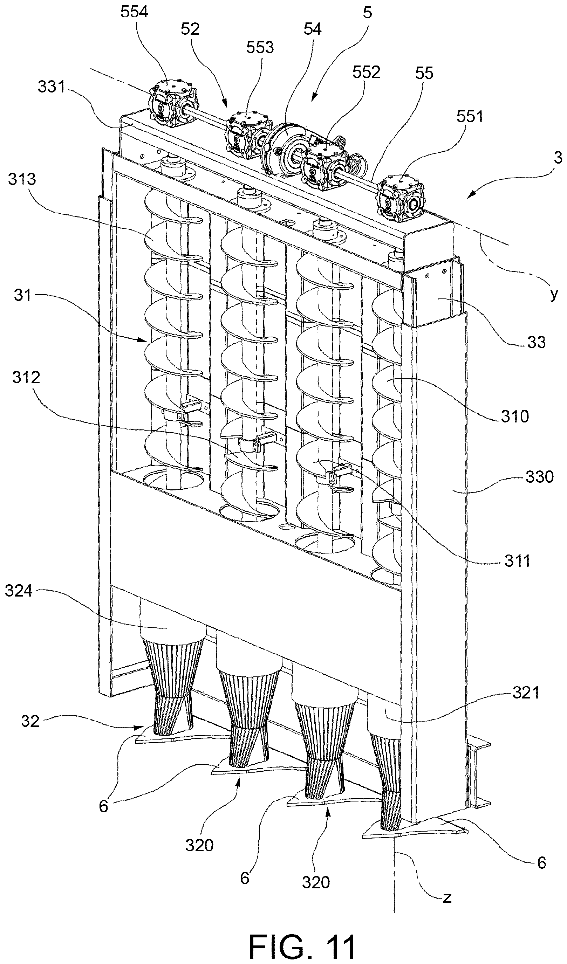

In an embodiment, for example shown in figure 11, the auger-actuating means 5 comprise a hydraulic motor 54 or an electric motor and the transmission means 52 for transmitting the rotary motion of the electric or hydraulic motor 54 to each auger 310, 311 312, 313 comprise a transmission shaft 55 suitable for distributing the rotary motion to each auger 310, 311, 312, 313.

Preferably, the shaft rotation axis Y of the transmission shaft 55 is perpendicular to the vertical axis Z and substantially parallel to the land T.

Preferably, the hydraulic or electric motor 54 is arranged above the augers 310, 311, 312, 313, i.e. on the opposite side with respect to the hoes 6. In particular, preferably, the frame 33 comprises a crosspiece 331, arranged in such a way that its largest dimension is perpendicular to the direction of greatest extension of the sliding guide 330. Preferably, at each auger 310, 311, 312, 313 the transmission means 52 comprise a dedicated transmission device 554, 553, 552, 551 for each auger (for example dedicated gears or dedicated chain or belt transmission systems), for the transmission of the motion of the transmission shaft 55 to each auger; in this way, preferably, a rotary motion of each auger 310, 311, 312, 313 is obtained around a rotation axis parallel to the vertical axis Z.

Preferably, the crosspiece 331 supports the hydraulic motor 54 and/or one or more dedicated transmission devices 554, 553, 552, 551 for each auger.

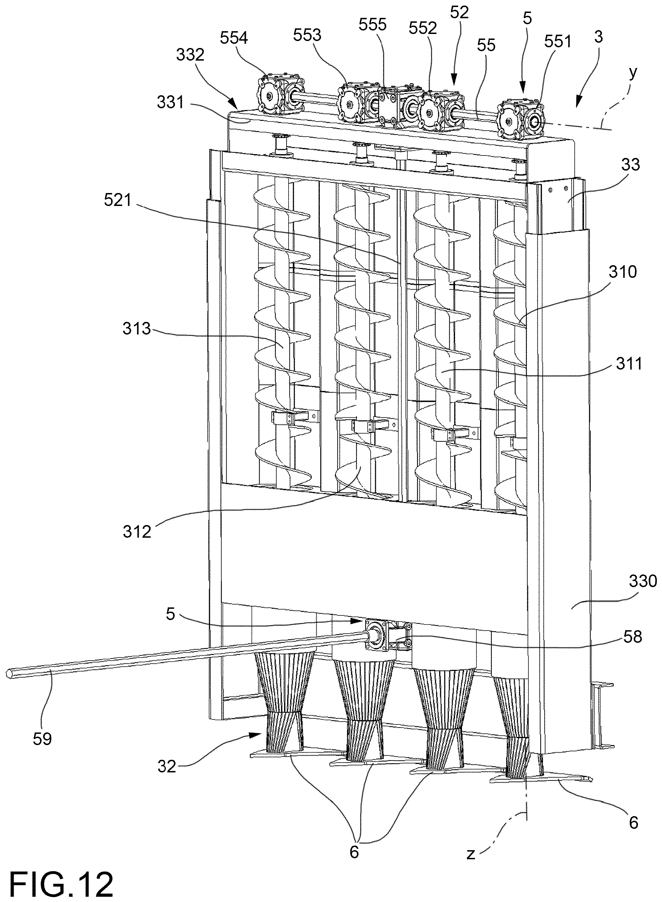

Advantageously, the embodiment which provides the use of a hydraulic motor 54, allows optimizing and simplifying the auger-actuating means 5; in fact, it is possible to use a smaller number of components and it is possible to use the same hydraulic circuit of the vehicle 100, suitably connected to the hydraulic motor 54. In an embodiment, for example shown in figure 12, the auger-actuating means 5 comprise a shaft attachment 58, adapted to receive a drive shaft 59 which receives the motion from the motor means of the vehicle 100, for example the heat engine of the vehicle or the hydraulic means for moving the vehicle 100. In this variant, the transmission means 52 for transmitting the rotary motion of the drive shaft 59 to each auger 310, 311, 312, 313 comprise a transmission shaft 55 suitable for distributing the rotary motion to each auger 310, 311, 312 , 313, as in the case of the variant described in figure 11.

Preferably, the shaft rotation axis Y of the transmission shaft 55 is perpendicular to the vertical axis Z and substantially parallel to the land T.

Preferably, the shaft attachment 58 is arranged below, i.e. closer to the land T with respect to the upper top 332 of the frame 33, and in any case closer to the land T rather than to the crosspiece 331.

Moreover, in a preferred embodiment, the transmission means 52 comprise a vertical shaft 521 operatively connected to the shaft attachment 58 to transmit the rotary motion from the drive shaft 59 to the transmission shaft 55. In particular, the vertical shaft 521 extends mainly in the vertical direction Z. Moreover, in this variant, preferably the shaft attachment 58 comprises mechanical gears suitable for transforming the rotary motion of the drive shaft 59 into a rotary motion of the vertical shaft 521 around an axis parallel to the vertical direction. Preferably, therefore, the transmission means also comprise an auxiliary transmission device 555, for example mechanical gears, suitable for converting the rotary motion of the vertical shaft 521 into a rotary motion about the rotation axis of the shaft Y of the transmission shaft 55. Also in this variant, preferably, at each auger 310, 311, 312, 313 the transmission means 52 comprise a dedicated transmission device 554, 553, 552, 551 for each auger (for example dedicated gears or dedicated chain or belt transmission systems), for the transmission of the motion of the transmission shaft 55 to each auger; in this way, preferably, a rotary motion of each auger 310, 311, 312, 313 is obtained around a rotation axis parallel to the vertical axis Z.

Preferably, the crosspiece 331 supports the auxiliary transmission device 555 and/or one or more dedicated transmission gears 554, 553, 552, 551 for each auger.

In this variant, the driving force of the vehicle 100 itself is advantageously used through the drive shaft, avoiding the use of further motor means for moving the augers and thus optimizing the use of energy resources and the simplicity of construction.

Preferably, the vehicle comprises thrust means 7, such as a hydraulic plow, adapted to push the biosolid material towards the picking means 21. Such a hydraulic plow is for example arranged in its backward configuration on the opposite side with respect to the position of the picking means. In the embodiment shown in figure 1, the thrust means 7 are configured to push the biosolid material in a direction parallel to the ground towards the picking means 31.

In a preferred embodiment, the vehicle further comprises a fluid circulation circuit 8, for example one or more pipes, connected to a fluid tank 9. Spray nozzles 81 are installed on the fluid circulation circuit 8, suitable for spraying/vaporizing the fluid inside the body 2, above the biosolid material. This allows breaking down the volatile particles and/or regulating the humidity of the biosolid material.

Preferably, the vehicle 1 further comprises an active carbon filter 10 communicating with the inside of the body 2 and adapted to neutralize the odor of the biosolid material towards the external environment.

The present invention also relates to a method of distributing a biosolid material or manure on agricultural land. The method is preferably implemented by means of a vehicle 1 described above in the present description.

The method comprises the steps of moving a body 2 containing the biosolid material onto a land T and, during the movement of the body 2 gradually unloading the biosolid material close to the ground or burrowing the biosolid material, without manual intervention by an operator or other vehicle during the unloading step.

In the use of a vehicle 1 described above, the method preferably comprises the following steps. Initially, the vehicle 1 provides the distributor member in the backward position. In this position, the hoes 6 are arranged in proximity to the body 2 and the escape of biosolid material from the outlet mouth 320 of each hoe 6 is prevented.

Subsequently, the distributor member is moved by the actuating member 4 to move to an advanced position closer to the land T with respect to the backward position. The final advanced position is adjustable by an operator, who decides the final position of the distributor member 3 and, therefore, of the outlet mouth 320 of each hoe 6 with respect to the surface of the land T.

In a variant of the method, the step is provided in which the hoes are moved until they reach a position in which the outlet mouth 320 is at ground level. In this mode, the biosolid material is distributed low to the land and the possibility of creating material aerosols is reduced.

In another variant of the method, the step is provided in which the hoes are moved until they reach a position in which the outlet mouth 320 is buried, below the surface of the ground. In this mode, the biosolid material is buried during the advancement of the vehicle 1, substantially eliminating the possibility of releasing volatile particles of biosolid material into the air.

Innovatively, the present invention allows drastically reducing the generation of unpleasant odor during the distribution of biosolid material and the introduction of greenhouse gases into the air. At the same time, the present invention allows considerably reducing the timing of distribution of the material on the ground and consumption in terms of energy for distribution (lower consumption of fuel and/or electricity).

In fact, in contrast to the prior art which provides for the use of machinery for spreading manure and the subsequent burial by means of a second passage of burying means, the vehicle according to the present invention allows avoiding the creation of volatile material, with an unpleasant smell, and at the same time avoids the subsequent passage by burying machinery.

Furthermore, contrary to the manure spreader means, the vehicle according to the present invention does not crush or throw away the biosolid material, thus avoiding the generation of aerosols with an unpleasant smell.

The measures adopted in the present invention therefore allow a spreading of biosolid material in a more efficient manner from the energy point of view and with particular attention to environmental protection, due to the reduction of the greenhouse gases released to the atmosphere.

The presence of independent rotating augers and hoes allows regulating and distributing the biosolid material in an effective and regular manner.

Furthermore, due to the presence of an activated carbon filter, the possibility of generating unpleasant odors is further reduced.

Moreover, the possibility of burying the biosolid material at varying depths in the land allows optimizing the yield of the biosolid material and at the same time reducing the emission of unpleasant smell.

It is clear that a person skilled in the art may make changes to the invention described above in order to meet incidental needs, all falling within the scope of protection defined in the following claims.

## Claims

1. Vehicle (1) for the distribution of biosolid material, such as sewage sludge or defecation gypsum, or manure on agricultural land, said vehicle comprising:
- a body (2) adapted to contain the biosolid material and adapted to be transported on the agricultural land (T);
- a spreader (3) supported on at least one (21, 22) of the sides of the body (2), said spreader (3) comprising picking means (31) of the biosolid material from the body, conveying means (32) of the biosolid material from the pickup means (31), said conveying means (32) comprising an outlet mouth (320) for the biosolid material towards the land (T);
- member actuating means (4) adapted to move the conveying means (32) from a retracted position, in which the outlet mouth (320) is spaced above the surface of the land (T), to an advanced position, in which the outlet mouth (320) is adapted to be buried in the ground at a given depth (D) or just above the surface of the land (T) ;
**characterized in that** the spreader (3) comprises a frame (33) supported by opposite sides (21, 22) of the body (2), and **in that** said frame (33) supports the picking means (31) and the conveying means (32) and **in that** the member actuating means (4) are operatively connected to the frame (33) to translate it in a vertical direction (Z) substantially perpendicular to the ground.

2. Vehicle (1) according to claim 1, wherein the member actuating means (4) are adapted to move both the picking means (31) and the conveying means (32), preferably integrally connected to each other.

3. Vehicle (1) according to any one of the preceding claims, wherein the picking means (31) comprise one or more rotating augers (310, 311, 312, 313), adapted to pick up the biosolid material from the body and push it towards the conveying means (32) and wherein said vehicle (1) comprises auger-actuating means (5) suitable for rotating each or multiple rotating augers (310, 311, 312, 313) .

4. Vehicle (1) according to claim 2 and 3, wherein the frame (33) also supports the auger-actuating means (5), said auger-actuating means (5) being therefore also translated in the vertical direction (Z) when the frame is translated in the same vertical direction (Z).

5. Vehicle (1) according to any one of the preceding claims, wherein the conveying means (32) comprise one or more hoes (6) adapted to create a furrow in the ground, the outlet mouth (320) for the biosolid material coming from the picking means (31) being formed on each of said hoes (6) .

6. Vehicle (1) according to any one of the preceding claims, wherein in the advanced position, the outlet mouth (320) is buried in the ground at a depth (D) of less than 30 cm, preferably less than or equal to 20 cm.

7. Vehicle (1) according to any one of the preceding claims, comprising thrust means (7), such as a hydraulic plow, adapted to push the biosolid material towards the picking means.

8. Vehicle (1) according to any one of the preceding claims, comprising a fluid circulation circuit (8) connected to a fluid reservoir (9), spray nozzles (81) being installed on said circuit, adapted to spray the fluid inside the body, above the biosolid material.

9. Vehicle (1) according to any one of the preceding claims, comprising an active carbon filter (10) communicating with the inside of the body (2) and adapted to neutralize the odor of the biosolid material towards the external environment.

10. Vehicle (1) according to any one of the preceding claims, said vehicle being a wagon or a trailer.

11. Vehicle (1), according to any one of the preceding claims, comprising sewage sludge or derivatives thereof in the body (2).

12. Vehicle (1), according to any one of the preceding claims, wherein the frame (33) is slidably supported by the body (2).

13. Method of distribution of a biosolid or manure material on agricultural land carried out by a vehicle (1) according to any one of the preceding claims, comprising the steps of:
- moving a body containing the biosolid material onto a land and, during the movement of the body, gradually unloading the biosolid material close to the ground or burrowing the biosolid material, without manual intervention by an operator or other vehicle.

## Patentansprüche

1. Fahrzeug (1) zur Verteilung von Biofeststoffmaterial, wie Klärschlamm oder Defäkationsgips, oder Gülle auf Agrarland, wobei das Fahrzeug umfasst:
- einen Körper (2), der angepasst ist, das Biofeststoffmaterial zu beinhalten, und angepasst ist, auf das Agrarland (T) transportiert zu werden;
- einen Verteiler (3), der auf zumindest einer (21, 22) der Seiten des Körpers (2) gestützt bzw. getragen ist, wobei der Verteiler (3) Aufnahmemittel (31) des Biofeststoffmaterials aus dem Körper, Fördermittel (32) des Biofeststoffmaterials von den Aufnahmemitteln (31) umfasst, wobei die Fördermittel (32) eine Auslassmündung (320) für das Biofeststoffmaterial zu dem Land (T) hin umfassen;
- Gliedbetätigungsmittel (4), die angepasst sind, die Fördermittel (32) von einer zurückgezogenen Position, in der die Auslassmündung (320) über der Oberfläche des Lands (T) beabstandet ist, in eine vorgeschobene Position zu bewegen, in der die Auslassmündung (320) angepasst ist, in einer gegebenen Tiefe (D) in den Boden eingegraben zu werden, oder genau über der Oberfläche des Lands (T);
**dadurch gekennzeichnet, dass** der Verteiler (3) einen Rahmen (33) umfasst, der durch gegenüberliegende bzw. entgegengesetzte Seiten (21, 22) des Körpers (2) gestützt bzw. getragen ist, und dadurch, dass der Rahmen (33) die Aufnahmemittel (31) und die Fördermittel (32) stützt bzw. trägt, und dadurch, dass die Gliedbetätigungsmittel (4) operativ mit dem Rahmen (33) verbunden sind, um ihn in einer vertikalen Richtung (Z) im Wesentlichen senkrecht zu dem Boden zu verschieben.

2. Fahrzeug (1) nach Anspruch 1, wobei die Gliedbetätigungsmittel (4) angepasst sind, sowohl die Aufnahmemittel (31) als auch die Fördermittel (32) zu bewegen, vorzugsweise integral bzw. einstückig miteinander verbunden.

3. Fahrzeug (1) nach einem der vorhergehenden Ansprüche, wobei die Aufnahmemittel (31) eine oder mehrere rotierende Schnecken (310, 311, 312, 313) umfassen, die angepasst sind, das Biofeststoffmaterial von dem Körper aufzunehmen und es zu den Fördermitteln (32) hin zu schieben, und wobei das Fahrzeug (1) Schneckenantriebsmittel (5) umfasst, die geeignet sind, jede oder mehrere rotierende Schnecken (310, 311, 312, 313) zu drehen.

4. Fahrzeug (1) nach Anspruch 2 und 3, wobei der Rahmen (33) auch die Schneckenbetätigungsmittel (5) stützt bzw. trägt, wobei die Schneckenbetätigungsmittel (5) daher auch in der vertikalen Richtung (Z) verschoben werden, wenn der Rahmen in dieselbe vertikale Richtung (Z) verschoben wird.

5. Fahrzeug (1) nach einem der vorangehenden Ansprüche, wobei die Fördermittel (32) eine oder mehrere Hacken (6) umfassen, die angepasst sind, eine Furche in dem Boden zu erzeugen, wobei die Auslassmündung (320) für das Biofeststoffmaterial von den Aufnahmemitteln (31) kommt, die an jeder der Hacken (6) ausgebildet sind.

6. Fahrzeug (1) nach einem der vorhergehenden Ansprüche, wobei in der vorgeschobenen Position die Auslassmündung (320) in einer Tiefe (D) von weniger als 30 cm, vorzugsweise kleiner oder gleich 20 cm, im Boden vergraben ist.

7. Fahrzeug (1) nach einem der vorangehenden Ansprüche, umfassend Schubmittel (7), wie z. B. einen hydraulischen Pflug, die angepasst sind, das Biofeststoffmaterial zu den Aufnahmemitteln hin zu schieben.

8. Fahrzeug (1) nach einem der vorhergehenden Ansprüche, umfassend einen Flüssigkeitskreislauf (8), der mit einem Flüssigkeitsreservoir (9) verbunden ist, wobei Sprühdüsen (81) an dem Kreislauf installiert sind, die angepasst sind, die Flüssigkeit im Inneren des Körpers zu sprühen, und zwar über dem Biofeststoffmaterial.

9. Fahrzeug (1) nach einem der vorangehenden Ansprüche, umfassend einen Aktivkohlefilter (10), der mit dem Inneren des Körpers (2) in Verbindung steht und angepasst ist, den Geruch des Biofeststoffmaterials zu der äußeren Umgebung hin zu neutralisieren.

10. Fahrzeug (1) nach einem der vorhergehenden Ansprüche, wobei das Fahrzeug ein Waggon oder ein Anhänger ist.

11. Fahrzeug (1), nach einem der vorhergehenden Ansprüche, umfassend Klärschlamm oder Derivate davon in dem Körper (2).

12. Fahrzeug (1) nach einem der vorhergehenden Ansprüche, wobei der Rahmen (33) verschiebbar durch den Körper (2) gestützt bzw. getragen ist.

13. Verfahren zur Verteilung eines Biofeststoffmaterials oder Güllematerials auf Agrarland, ausgeführt durch ein Fahrzeug (1) nach einem der vorhergehenden Ansprüche, umfassend die Schritte:
- Bewegen eines Körpers, der das Biofeststoffmaterial enthält, auf ein Land und während der Bewegung des Körpers allmähliches Entladen des Biofeststoffmaterials in Bodennähe oder Eingraben des Biofeststoffmaterials ohne manuelles Eingreifen durch eine Bedienperson oder ein anderes Fahrzeug.

## Revendications

1. Véhicule (1) pour la distribution de matériau biosolide, tel que des boues d'épuration ou du gypse de défécation, ou du fumier sur une terre agricole, ledit véhicule comprenant :
- une caisse (2) adaptée pour contenir le matériau biosolide et adaptée pour être transportée sur la terre agricole (T) ;
- un épandeur (3) supporté sur au moins un (21, 22) des côtés de la caisse (2), ledit épandeur (3) comprenant des moyens de ramassage (31) du matériau biosolide à partir de la caisse, des moyens d'acheminement (32) du matériau biosolide à partir des moyens de ramassage (31), lesdits moyens d'acheminement (32) comprenant un bec de refoulement (320) du matériau biosolide vers la terre (T) ;
- des moyens d'actionnement d'organe (4) adaptés pour déplacer les moyens d'acheminement (32) depuis une position rétractée, dans laquelle le bec de refoulement (320) est espacé au-dessus de la surface de la terre (T), vers une position avancée, dans laquelle le bec de refoulement (320) est adapté pour être enterré dans le sol à une profondeur donnée (D) ou juste au-dessus de la surface de la terre (T) ;
**caractérisé en ce que** l'épandeur (3) comprend un cadre (33) supporté par des côtés opposés (21, 22) de la caisse (2), et **en ce que** ledit cadre (33) supporte les moyens de ramassage (31) et les moyens d'acheminement (32) et **en ce que** les moyens d'actionnement d'organe (4) sont raccordés fonctionnellement au cadre (33) pour le translater dans une direction verticale (Z) sensiblement perpendiculaire au sol.

2. Véhicule (1) selon la revendication 1, dans lequel les moyens d'actionnement d'organe (4) sont adaptés pour déplacer à la fois les moyens de ramassage (31) et les moyens d'acheminement (32), de préférence raccordés solidairement les uns aux autres.

3. Véhicule (1) selon l'une quelconque des revendications précédentes, dans lequel les moyens de ramassage (31) comprennent une ou plusieurs tarières rotatives (310, 311, 312, 313), adaptées pour ramasser le matériau biosolide à partir de la caisse et le pousser vers les moyens d'acheminement (32) et dans lequel ledit véhicule (1) comprend des moyens d'actionnement de tarière (5) convenant pour faire tourner chaque ou de multiples tarières rotatives (310, 311, 312, 313).

4. Véhicule (1) selon les revendications 2 et 3, dans lequel le cadre (33) supporte également les moyens d'actionnement de tarière (5), lesdits moyens d'actionnement de tarière (5) étant donc également translatés dans la direction verticale (Z) lorsque le cadre est translaté dans la même direction verticale (Z).

5. Véhicule (1) selon l'une quelconque des revendications précédentes, dans lequel les moyens d'acheminement (32) comprennent une ou plusieurs houes (6) adaptées pour créer un sillon dans le sol, le bec de refoulement (320) pour le matériau biosolide provenant des moyens de ramassage (31) étant formé sur chacune desdites houes (6).

6. Véhicule (1) selon l'une quelconque des revendications précédentes, dans lequel, dans la position avancée, le bec de refoulement (320) est enterré dans le sol à une profondeur (D) de moins de 30 cm, de préférence inférieure ou égale à 20 cm.

7. Véhicule (1) selon l'une quelconque des revendications précédentes, comprenant des moyens de poussée (7), tels qu'une charrue hydraulique, adaptés pour pousser le matériau biosolide vers les moyens de ramassage.

8. Véhicule (1) selon l'une quelconque des revendications précédentes, comprenant un circuit de circulation de fluide (8) raccordé à un réservoir de fluide (9), des buses de pulvérisation (81) étant installées sur ledit circuit, adaptées pour pulvériser le fluide à l'intérieur de la caisse, au-dessus du matériau biosolide.

9. Véhicule (1) selon l'une quelconque des revendications précédentes, comprenant un filtre à charbon actif (10) communiquant avec l'intérieur de la caisse (2) et adapté pour neutraliser l'odeur du matériau biosolide vis-à-vis de l'environnement extérieur.

10. Véhicule (1) selon l'une quelconque des revendications précédentes, ledit véhicule étant un wagon ou une remorque.

11. Véhicule (1) selon l'une quelconque des revendications précédentes, comprenant des boues d'épuration ou des dérivés de celles-ci dans la caisse (2).

12. Véhicule (1), selon l'une quelconque des revendications précédentes, dans lequel le cadre (33) est supporté par la caisse (2) avec faculté de coulissement.

13. Procédé de distribution d'un matériau biosolide ou de fumier sur de la terre agricole réalisé par un véhicule (1) selon l'une quelconque des revendications précédentes, comprenant les étapes de :
- déplacement d'une caisse contenant le matériau biosolide sur une terre et, pendant le déplacement de la caisse, déchargement progressif du matériau biosolide à proximité du sol ou enfouissage du matériau biosolide, sans intervention manuelle d'un opérateur ou d'un autre véhicule.
